# EUROPEAN PATENT APPLICATION

(11) **EP 4 763 779 A1**
(43) Date of publication of application: **24.06.2026**
(21) Application number: 25756990.5
(22) Date of filing: 09.07.2025
(51) Int. Cl.: B66B 5/16, B66B 5/18, F16H 21/44, B66B 5/22

(54) **COMPACT ELECTROMECHANICAL ACTUATOR FOR THE ACTIVATION OF LIFT EMERGENCY STOP**

(71) Applicant: DYNATECH, DYNAMICS & TECHNOLOGY, S.L., 50750 Pina de Ebro (Zaragoza) (ES)
(72) Inventor: MATEO MUR, Francisco de Asís, 50750 Pina de Ebro (Zaragoza) (ES)
(74) Representative: Hernández Hernández, Carlos
(86) International application number: PCT/ES2025/070421
(87) International publication number: WO 2026/062302

(57) **Abstract**

An electromechanical actuator which comprises a support plate (23) whereon a linear actuator (1) is arranged housed between a movable upper plate (16) and a fixed lower plate (17) and an accumulator spring (14). The linear actuator (1) also has a suction coil (2) attached to its end and also comprises a movable reset catch plate (11) whereto a magnetising plate (4) is attached and is therefore movable with the reset catch plate (11). The electromechanical actuator also comprises levers (10) in charge of transmitting the actuation towards an interlocking roller (9.2) or towards two interlocking rollers (9.1) and (9.2), depending on whether it is a one-way or two-way safety gear. Lastly, the electromechanical actuator comprises a series of monitoring sensors. This enables much more force to be delivered, a simplification of the system, increased safety contact pressing distance, springs that work under compression and a silent stand-by mode.

## Description

### Technical Field

The subject matter of the present invention, as the title of the invention states, is a compact electromechanical actuator with increased robustness and force for a lift safety gear, forming a small-sized emergency stop assembly for a lift and which acts as an interface between an electronic overspeed detection system and an element in charge of stopping the lift car in case of emergency.

The present invention is characterized by the special configuration and design of each of the parts of the mechanism so that a positive electromechanical safety actuator is achieved in a small volume, enabling its assembly within the frame jamb such that it does not protrude, wherein the existing mechanisms are simplified, the robustness of the system is improved and spring and reset force is increased.

The electromechanical actuator which is the subject matter of the invention is also characterized in that it can be applied in both two-way and one-way safety gears.

Therefore, the present invention falls within the field of lifts, specifically within the field of safety means used to stop a lift.

### Background

The electromechanical actuator disclosed in patent WO2023187321 is known in the prior art, which discloses a compact electromechanical activation system for a lift safety gear, characterized in that it comprises:
- A fixed protection plate whereto actuation means based on a reset coil and a retention coil are fixed and means of release in aligned arrangement.
- Mobile wedging means activated by actuation means and wherein these mobile wedging means are arranged parallel to the actuation means.
- One or two wedging rollers, depending on whether for a one-way safety gear system or a two-way safety gear system, respectively.

The activation of the existing actuators functions properly, but the force of the coil is very limited compared to the force of the interlocking springs it must overcome. This is due to the physical limitation of the coil, as it is impossible to apply more force because of its small size.

It is also intended to simplify the system, since the use of ropes and pulleys adds many parts to the activation of the existing actuators, significantly making assembly more complicated and time-consuming.

Another objective of this new form of activation is to enable longer pressing distance of the safety contact in case of interlocking, since in the activation of the existing actuators it is only 2 mm, which is very limited.

It also seeks to change the interlocking springs from traction to compression, which are much more consistent in terms of force during operation.

It also introduces the possibility of enabling a silent stand-by mode, which makes it possible to position the rollers in the guide rail in a controlled manner so that the suction cup can be de-energized and the system has no power consumption. A stand-by mode does not make sense in the case of known actuators, since they need to be de-energized for too long (more than 8 hours) to offset the consumption peak generated by the reset coil. Moreover, their stand-by mode is not silent, since the coil releases the rollers as if it were a normal actuation, generating a lot of noise and marking the guide rails in the roller impact area. The actuator makes it possible to move the rollers towards the guide rail in a controlled manner and release them once they are in place, without generating wear or noise. In addition, their low power consumption justifies the energy savings.

Therefore, the invention is aimed at overcoming the aforementioned drawbacks:
- Limited coil force compared to spring force.
- Complexity of the system both in terms of assembly and operation, due to having a set of pulleys and ropes.
- Shorter pressing distance of the safety contact in case of interlocking.
- Replacement of the traction interlocking springs with others more suitable for a safety function.
- Non-silent stand-by mode in which the coil releases the rollers, generating a lot of noise and marking the guide rails in the area where the rollers impact.

In addition, a further object of this application is to develop an electromechanical actuator for lift safety gears such as that described below and the essence of which is set out in Claim 1.

### Summary of the invention

The object of the present invention is set out in its essence in the independent claim and the different embodiments are set out in the dependent claims.

The object of the present invention is a compact electromechanical actuator with increased robustness and force for a lift safety gear which uses a linear actuator that is capable of applying much more force than the reset coil, since said coil is very limited compared to the force of the interlocking springs.

The electromechanical actuator that is the subject matter of the invention comprises:
- A fixed support plate whereon a reset linear actuator is mounted arranged in a floating manner between an upper and a lower plate, wherebetween an accumulator spring is located wherein the upper plate is vertically movable so that it moves towards or away from the lower plate.
- A suction coil that is arranged solidly mounted on the linear actuator rod; therefore, the suction coil is mobile, moving between a suction magnetising plate which is solidly joined to the reset catch plate and the lower plate wherein the linear actuator is housed.
- Two actuation springs which are compression springs: the spring for the upper roller and the spring for the lower roller. Said springs are designed such that Δx/Lo is as low as possible, so that the ratio of the force in maximum compression to the force in minimum compression is as close to 1 as possible. This is achieved by giving the springs a long initial length, achieving high initial compression. This enables the force supplied by the springs to be as constant as possible and not excessive in maximum compression. Given that the compression mechanisms of each spring are independent, it is easier to regulate the wedging force required by each roller to go from resting on the roller end plate to resting on the guide rail. The upper spring should only overcome these frictions and is aided by the weight of the upper roller, cam and connecting rod.
- A roller wedging system, such that they are wedged independently and are composed by two connecting rods with their respective cams, which are joined to each actuation roller. The upper connecting rod is a third-degree lever which, when receiving vertical downward force, from the upper compression mechanism, pushes the upper roller downwards. The lower connecting rod is a first-degree lever which, when receiving vertical downward force, pushes the lower roller upwards.
- A series of actuator monitoring sensors:
   - A first monitoring sensor: Fixed to the upper plate, it monitors that the accumulation spring is not compressed, i.e. that reset is complete. It is pressed when the system is ready for operation.
   - A second monitoring sensor: Fixed to the support plate, it monitors that the rod has been fully retracted to complete reset. It is pressed when the system is ready for operation.
   - A third monitoring sensor solidly joined to the actuator rod serves to give the signal to reverse the polarity of the actuator in order to retract it once it has hooked onto the catch plate and reset the rollers. It is pressed when the suction cup comes into contact with the catch plate during reset. It must remain pressed for the system to be ready for operation.

In the case of a reset after wedging, the mechanism cannot be reset because the rollers are wedged, due to which the actuation rod extends up to the catch plate and hooks onto it; however, since it cannot move it, it is the body of the actuator that moves towards the catch plate while the rod is retracted. All this travel and energy is "stored" in the accumulation spring. Once fully retracted, the system is only waiting for the lift car to move in the opposite direction of the wedging. As the car moves the accumulation spring releases energy, forcing the rollers to retract and fully reset the system.

If the compact electromechanical actuator is used for a one-way safety gear, a single compression spring, a single connecting rod and a single roller is used, wherein the connecting rod is a first-degree lever that, when receiving a downward force, pushes the lower roller upwards.

The previously described features make it possible to achieve:
a) On the one hand, the use of a linear actuator makes it possible to apply much more force, since in the systems of the prior art the reset coil has very limited force compared to the interlocking springs.
b) In addition, a simplification of the system is achieved on simplifying the assembly, since ropes and pulleys are not used in the activation of the actuators.
c) A longer pressing distance of the safety contact is also achieved in the case of interlocking.
d) Another advantage is that the use of interlocking springs that work under compression are much more suitable for a safety function.
e) It is also possible to enable a silent stand-by mode that makes it possible to position the rollers on the guide rail in a controlled manner so that the suction cup can be de-energised and the system has no power consumption. With the actuator being proposed, the rollers can be moved towards the guide rail in a controlled manner and released once in place without generating wear and noise, in addition to achieving low consumption.

Unless indicated otherwise, all the technical and scientific elements used in the present description have the meaning usually understood by a person ordinarily skilled in the art to which this invention belongs. Processes and materials similar or equivalent to those described in the description may be used in the embodiment of the present invention.

Throughout the description and claims, the word "comprises" and its variants do not intend to exclude other technical features, additives, components or steps. For persons skilled in the art, other objects, advantages and features of the invention shall be partly inferred from the description and partly from the embodiment of the invention.

### Brief description of drawings

As a complement to the description being made, and for the purpose of helping to make the features of the invention more readily understandable, in accordance with a preferred practical embodiment thereof, said explanation is accompanied by a set of drawings constituting an integral part thereof which, by way of illustration and not limitation, represent the following.
Figure 1 shows a frontal view of the actuator which is the object of the invention.
Figure 2 shows a side view of the actuator.
Figure 3 shows a second side view of the actuator.
Figure 4 shows a back or rear view of the actuator.
Figure 5 shows the actuator in a reset position.
Figure 6 shows the actuator in a pre-wedging position.
Figure 7 shows a side view of the actuator for a one-way safety gear.
Figure 8 shows a first frontal view of the actuator for a one-way safety gear; and
Figure 9 shows a second side view of the actuator for the one-way safety gear.

### Description of embodiments

A preferred embodiment of the proposed invention is described below with reference to the accompanying drawings.

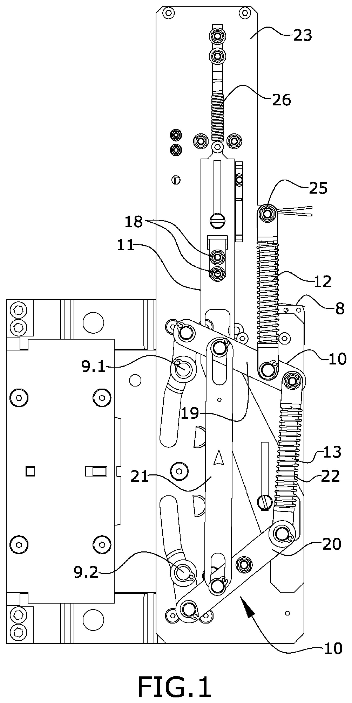

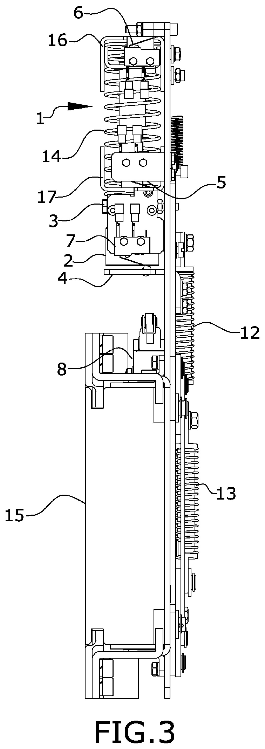

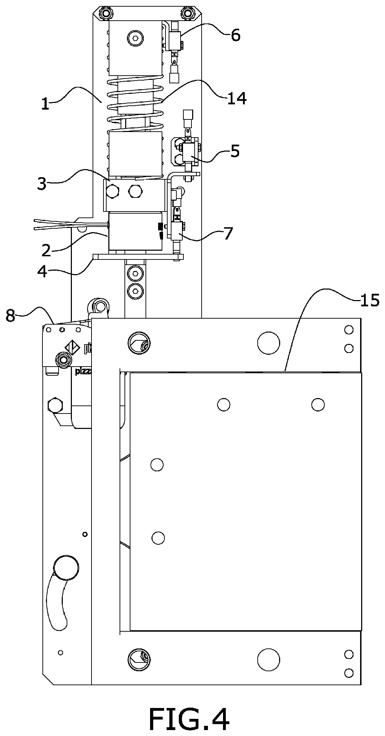

Figures 1 to 4 show that the compact electromechanical actuator which is the object of the invention comprises a support plate (23) whereto the different elements of the electromechanical actuator are fixed or attached. A linear actuator (1) is arranged on the upper part of said support plate (23) housed between a movable upper plate (16) and a fixed lower plate (17), with an accumulator spring arranged between said plates (14).

The linear actuator (1) comprises a rod (24) which has a suction coil (2) attached to its far end by means of a fixing element (3) joined to said suction coil (2).

The compact electromechanical actuator also comprises a movable reset catch plate (11) arranged on the support plate (23). A magnetising plate (4) is attached to this reset catch plate (11), which is therefore movable with the reset catch plate (11), using fixing means (18) for such purpose.

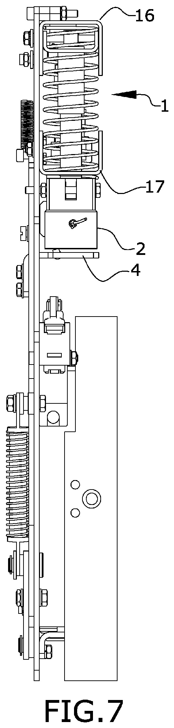

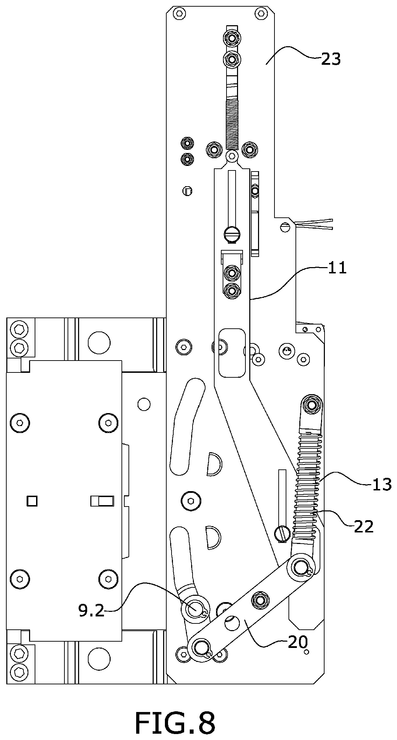

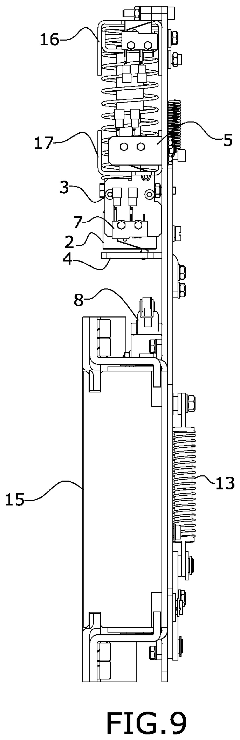

The compact electromechanical actuator comprises levers (10) which are in charge of transmitting the actuation towards an interlocking roller (9.2) (figures 7, 8 and 9) in the case of being a one-way safety gear or towards interlocking rollers (9.1) and (9.2) in the case of being a two-way safety gear, said levers (10) being attached to the reset catch plate (11) such that the movement of this reset catch plate (11) causes the levers (10) to move.

In the case of a two-way safety gear, the actuation levers (10) comprise an upper connecting rod (19) and a lower connecting rod (20), both joined by a roller discriminator (21) and by a cylindrical guide (22) for the lower roller actuation spring and that joins the opposing ends of the upper connecting rod (19) and the lower connecting rod (20), such that the point of union of the upper connecting rod (19) and the upper end of the roller discriminator (21) are joined to the reset catch plate (11).

The roller discriminator (21) is in charge of moving a roller away from the guide rail when it is the other roller which has completely interlocked.

Additionally, the levers comprise a first spring (12) which actuates the upper roller (9.1) arranged between a fixed point (25) and the free end of the upper connecting rod (19), being in charge of transmitting the actuation to the upper roller (9.1); it also comprises a second spring (13) which actuates the lower roller (9.2), wherein said second spring (13) is arranged on the cylindrical guide (22) for the spring that actuates the lower roller (9.2) which joins the opposing ends of the upper connecting rod (19) and lower connecting rod (20).

The upper connecting rod (19) is a third-degree lever that, when receiving vertical downward force, from the upper compression mechanism, pushes the upper roller (9.1) downwards. The lower connecting rod (20) is a first-degree lever that, when receiving vertical downward force, from the lower compression mechanism, pushes the lower roller (9.2) upwards.

Monitoring sensors are used to ensure the proper functioning of the electromechanical actuator in a possible form of embodiment, specifically:
a) A first monitoring sensor (6), fixed to the movable upper plate (16), monitors that the accumulation spring (14) is not compressed, i.e. that reset is complete. It is pressed when the system is ready for operation.
b) A second monitoring sensor (5), fixed to an ancillary plate, which is in turn fixed to the support plate (23), is in charge of monitoring that the rod (24) has been fully retracted to complete the reset. It is pressed when the system is ready for operation.
c) A third monitoring sensor (7), solidly joined to the actuator rod (24), serves to give the signal to reverse the polarity of the actuator to retract it once it has hooked onto the magnetising plate (4) and, thus, the reset catch plate (11) and reset the rollers. It is pressed when the suction coil (2) touches the magnetising plate (4) which is joined to the reset catch plate (11). It must remain pressed for the system to be ready for operation.

Additionally, the electromechanical actuator has a safety contact (8) that is only pressed when the rollers are fully wedged. It is pressed by the catch plate (11), since when the rollers (9.1) (9.2) are positioned on the guide rail, i.e. in the pre-wedging position, the catch plate is not in its lowest position, but rather only reaches this position when one of the two rollers is fully wedged.

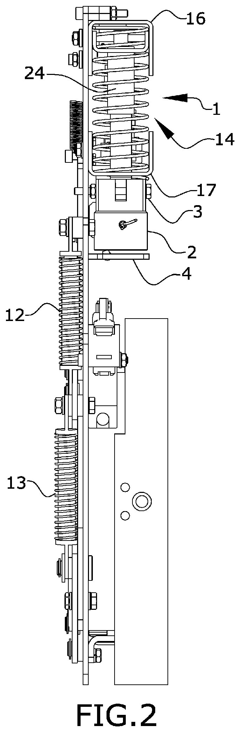

Figures 2, 3 and 4 show that the electromechanical actuator is joined to a mechanical safety gear (15).

Since the catch plate (11) is "loose" when the rollers are pre-wedged, it tends to fall under its own weight, and we only want it to fall to its lowest point when one of the two rollers is fully wedged. In order to prevent this, a small traction spring (26) is placed on the upper part of the catch plate (11), which forces it to be in the highest position until a roller is fully wedged and its connecting rod drags it downwards, thereby pressing the safety contact.

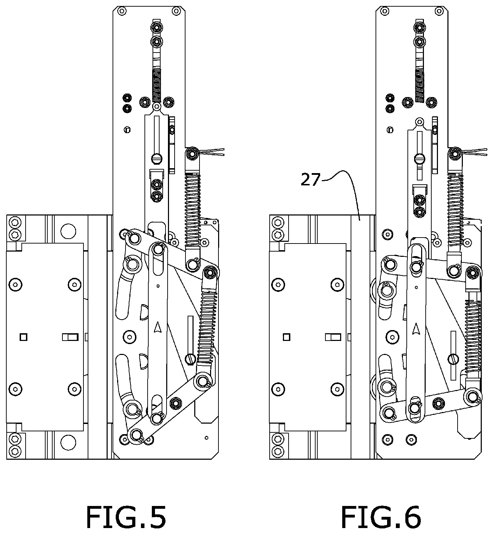

Figures 5 and 6 show the relative position adopted by the different elements of the levers. Figure 5 shows the reset position, while Figure 6 shows the pre-wedging position with the rollers positioned on a guide rail (27).

As shown in the drawings, both the linear actuator, the suction coil, the magnetising plate and the levers (10) adopt a vertical aligned arrangement, which clearly reduces the necessary volume for their installation, making it more compact and with a smaller volume.

Figures 7, 8 and 9 show the electromechanical actuator slightly modified for application in a one-way safety gear, not detracting whatsoever from the principles of the object of the invention.

Therefore, in the case of a one-way safety gear, the levers comprise a lower connecting rod (20) whose upper end is joined to the second spring (13) that actuates the lower roller (9.2), wherein this second spring is positioned on the cylindrical guide (22), while that lower end of the lower connecting rod (20) is joined to the cam that supports the lower roller (9.2), being joined to the upper end of the lower connecting rod (20) with the reset catch plate (11).

Consequently, as shown in said figures, the upper roller (9.1), the upper cam, the upper connecting rod (19) with its draw pin, the upper compression spring (12) and its guiding system, in addition to the discriminator (21), have been eliminated.

The lower connecting rod (20) is a first-degree lever that, when receiving downward vertical force, from the lower compression mechanism, pushes the lower roller (9.2) upwards.

Having sufficiently described the nature of the present invention, as well as the manner of putting it into practice, it is stated that, within its essential nature, it may be put into practice in other forms of embodiment that differ in detail to the one indicated by way of example, and to which the protection sought shall also extend, provided that it does not alter, change or modify its fundamental principle.

## Claims

1. A compact electromechanical actuator with increased robustness and force for a lift safety gear, **characterized in that** it comprises a support plate (23) whereto the different elements of the electromechanical actuator are fixed or attached, wherein the upper part of said support plate (23) comprises a linear actuator (1) housed between a movable upper plate (16) and a fixed lower plate (17), wherebetween an accumulator spring (14) is arranged; additionally, the linear actuator (1) comprises a rod (24) having a suction coil (2) attached to its end by means of a fixing element (3) fixed to said suction coil (2); in addition, the compact electromechanical actuator comprises a movable reset catch plate (11) arranged on a support plate (23), wherein a magnetizing plate (4) is joined to this reset catch plate (11) and is therefore movable with the reset catch plate (11); the electromechanical actuator also comprises levers (10) in charge of transmitting the actuation towards an interlocking roller (9.2) or towards two interlocking rollers (9.1) and (9.2), said levers (10) being joined to the reset catch plate (11) such that the movement of this reset catch plate (11) causes the levers (10) to move; and lastly, the electromechanical actuator comprises a series of monitoring sensors.

2. The compact electromechanical actuator with increased robustness and force for a lift safety gear, according to claim 1, **characterized in that** the actuation levers (10), if used in a two-way safety gear, comprises an upper connecting rod (19) and a lower connecting rod (20), joined by a roller discriminator (21) and by a cylindrical guide (22) for the lower roller actuation spring that joins the opposing ends of the upper connecting rod (19) and lower connecting rod (20), such that the point of union of the upper connecting rod (20) and the upper end of the roller discriminator (21) is joined to the reset catch plate (11).

3. The compact electromechanical actuator with increased robustness and force for a lift safety gear according to claim 2, **characterized in that**, the levers also comprise a first spring (12) which actuates the upper roller (9.1) arranged between a fixed point (25) and the free end of the upper connecting rod (19), being in charge of transmitting the actuation of the upper roller (9.1); it also comprises a second spring (13) which actuates the lower roller (9.2), said second spring (13) being arranged on the cylindrical guide (22) that joins the opposing ends of the upper connecting rod (19) and the lower connecting rod (20).

4. The compact electromechanical actuator with increased robustness and force for a lift safety gear, according to claim 2, **characterized in that** the actuation levers (10), if used in a one-way safety gear, comprise a lower connecting rod (20) whose upper end is joined to the second spring (13) which actuates the lower roller (9.2), wherein this second spring is arranged on the cylindrical guide (22), while the lower end of the connecting rod (20) is joined to the cam that supports the lower roller (9.2), such that the upper end of the upper connecting rod (19) is joined to the reset catch plate (11).

5. The compact electromechanical actuator with increased robustness and force for a lift safety gear, according to any of the preceding claims, **characterized in that** it comprises a series of monitoring sensors:
▪ A first monitoring sensor (6), fixed to the movable upper plate (16), monitors that the accumulation spring (14) is not compressed, i.e. that reset is complete, which is pressed when the system is ready for operation.
▪ A second monitoring sensor (5), fixed to the lower plate (17), in charge of monitoring that the rod (24) has been fully retracted to complete reset, which is pressed when the system is ready for operation.
▪ A third monitoring sensor (7) solidly joined to the actuator rod (24) serves to give the signal to reverse the polarity of the actuator in order to retract it once it has hooked onto the magnetising plate (4) and, thus, the reset catch plate (11) and reset the rollers.

6. The compact electromechanical actuator with increased robustness and force for a lift safety gear, according to any of the preceding claims, **characterised in that** it comprises a safety contact (8) which is only pressed when the rollers are fully wedged; it is pressed by the catch plate (11), since when the rollers (9.1) (9.2) are resting on the guide rail, i.e. in the wedging position, the catch plate is not in its lowest position, but rather only reaches this position when one of the two rollers is fully wedged.

## Amended claims

### Amended claims under Art. 19.1 PCT

1. A compact electromechanical actuator for a lift safety gear, comprising a support plate (23) whereto the different elements of the electromechanical actuator are fixed or attached, wherein an upper part of said support plate (23) comprises a linear actuator (1) housed between a movable upper plate (16) and a fixed lower plate (17), wherebetween an accumulator spring (14) is arranged; the electromechanical actuator also comprises levers (10) in charge of transmitting the actuation towards an interlocking roller (9.2) or towards two interlocking rollers (9.1) and (9.2), **characterized in that** additionally, the linear actuator (1) comprises a rod (24) having a suction coil (2) attached to its end by means of a fixing element (3) fixed to said suction coil (2); in addition, the compact electromechanical actuator comprises a movable reset catch plate (11) arranged on the support plate (23), wherein a magnetising plate (4) is joined to this reset catch plate (11) and is therefore movable with the reset catch plate (11); wherein the levers (10) are joined to the reset catch plate (11) such that the movement of this reset catch plate (11) causes the levers (10) to move; and lastly, the electromechanical actuator comprises a series of monitoring sensors.

2. The compact electromechanical actuator for a lift safety gear according to claim 1, **characterized in that** the actuation levers (10), if used in a two-way safety gear, comprises an upper connecting rod (19) and a lower connecting rod (20), joined by a roller discriminator (21) and by a cylindrical guide (22) for a lower roller actuation spring that joins the opposing ends of the upper connecting rod (19) and lower connecting rod (20), such that the point of union of the upper connecting rod (20) and the upper end of the roller discriminator (21) is joined to the reset catch plate (11).

3. The compact electromechanical actuator for a lift safety gear according to claim 2, **characterized in that** the levers also comprise a first spring (12) which actuates the upper roller (9.1) arranged between a fixed point (25) and a free end of the upper connecting rod (19), being in charge of transmitting the actuation of the upper roller (9.1); it also comprises a second spring (13) which actuates the lower roller (9.2), said second spring (13) being arranged on the cylindrical guide (22) that joins the opposing ends of the upper connecting rod (19) and the lower connecting rod (20).

4. The compact electromechanical actuator for a lift safety gear according to claim 2, **characterized in that** the actuation levers (10), if used in a one-way safety gear, comprise a lower connecting rod (20) whose upper end is joined to the second spring (13) which actuates the lower roller (9.2), wherein this second spring is arranged on the cylindrical guide (22), while the lower end of the connecting rod (20) is joined to the cam that supports the lower roller (9.2), such that the upper end of the upper connecting rod (19) is joined to the reset catch plate (11).

5. The compact electromechanical actuator for a lift safety gear, according to any of the preceding claims, **characterized in that** it comprises a series of monitoring sensors:
∘ A first monitoring sensor (6), fixed to the movable upper plate (16), monitors that the accumulation spring (14) is not compressed, i.e. that reset is complete, which is pressed when the system is ready for operation.
∘ A second monitoring sensor (5), fixed to the lower plate (17), in charge of monitoring that the rod (24) has been fully retracted to complete reset, which is pressed when the system is ready for operation.
∘ A third monitoring sensor (7) solidly joined to the actuator rod (24) serves to give the signal to reverse the polarity of the actuator in order to retract it once it has hooked onto the magnetising plate (4) and, thus, the reset catch plate (11) and reset the rollers.

6. The compact electromechanical actuator for a lift safety gear according to any of the preceding claims, **characterized in that** it comprises a safety contact (8) which is only pressed when the rollers are fully wedged; it is pressed by the reset catch plate (11), since when the rollers (9.1) (9.2) are resting on the guide rail, i.e. in the wedging position, the reset catch plate is not in its lowest position, but rather only reaches this position when one of the two rollers is fully wedged.

Statement under Art. 19.1 PCT
Claim 1 has been amended as follows:
- A compact electromechanical actuator for a lift safety gear, comprising a support plate (23) whereto the different elements of the electromechanical actuator are fixed or attached, wherein an upper part of said support plate (23) comprises a linear actuator (1) housed between a movable upper plate (16) and a fixed lower plate (17), wherebetween an accumulator spring (14) is arranged; the electromechanical actuator also comprises levers (10) in charge of transmitting the actuation towards an interlocking roller (9.2) or towards two interlocking rollers (9.1) and (9.2),; **characterized in that** additionally, the linear actuator (1) comprises a rod (24) having a suction coil (2) attached to its end by means of a fixing element (3) fixed to said suction coil (2); in addition, the compact electromechanical actuator comprises a movable reset catch plate (11) arranged on the support plate (23), wherein a magnetizing plate (4) is joined to this reset catch plate (11) and is therefore movable with the reset catch plate (11); the wherein the levers (10) are joined to the reset catch plate (11) such that the movement of this reset catch plate (11) causes the levers (10) to move; and lastly, the electromechanical actuator comprises a series of monitoring sensors.
The compact electromechanical actuator for a lift safety gear according to claim 1, **characterized in that** the actuation levers (10), if used in a two-way safety gear, comprises an upper connecting rod (19) and a lower connecting rod (20), joined by a roller discriminator (21) and by a cylindrical guide (22) for a lower roller actuation spring that joins the opposing ends of the upper connecting rod (19) and lower connecting rod (20), such that the point of union of the upper connecting rod (20) and the upper end of the roller discriminator (21) is joined to the reset catch plate (11).
The compact electromechanical actuator for a lift safety gear according to claim 2, **characterized in that**, the levers also comprise a first spring (12) which actuates the upper roller (9.1) arranged between a fixed point (25) and a free end of the upper connecting rod (19), being in charge of transmitting the actuation of the upper roller (9.1); it also comprises a second spring (13) which actuates the lower roller (9.2), said second spring (13) being arranged on the cylindrical guide (22) that joins the opposing ends of the upper connecting rod (19) and the lower connecting rod (20).
The compact electromechanical actuator for a lift safety gear according to claim 2, **characterized in that** the actuation levers (10), if used in a one-way safety gear, comprise a lower connecting rod (20) whose upper end is joined to the second spring (13) which actuates the lower roller (9.2), wherein this second spring is arranged on the cylindrical guide (22), while the lower end of the connecting rod (20) is joined to the cam that supports the lower roller (9.2), such that the upper end of the upper connecting rod (19) is joined to the reset catch plate (11).
The compact electromechanical actuator for a lift safety gear, according to any of the preceding claims, **characterized in that** it comprises a series of monitoring sensors:
   ▪ A first monitoring sensor (6), fixed to the movable upper plate (16), monitors that the accumulation spring (14) is not compressed, i.e. that reset is complete, which is pressed when the system is ready for operation.
   ▪ A second monitoring sensor (5), fixed to the lower plate (17), in charge of monitoring that the rod (24) has been fully retracted to complete reset, which is pressed when the system is ready for operation.
   ▪ A third monitoring sensor (7) solidly joined to the actuator rod (24) serves to give the signal to reverse the polarity of the actuator in order to retract it once it has hooked onto the magnetising plate (4) and, thus, the reset catch plate (11) and reset the rollers.
The compact electromechanical actuator for a lift safety gear, according to any of the preceding claims, **characterised in that** it comprises a safety contact (8) which is only pressed when the rollers are fully wedged; it is pressed by the reset catch plate (11), since when the rollers (9.1) (9.2) are resting on the guide rail, i.e. in the wedging position, the reset catch plate is not in its lowest position, but rather only reaches this position when one of the two rollers is fully wedged.

**CANCELLED CLAIMS**
 **No originally filed claim has been cancelled.**

**BASIS FOR THE AMENDMENTS**
 In claim 1, a feature in the characterizing portion of claim 1 has been moved to the preamble. The basis is claim 1 as originally filed.

In claim 6 "catch plate (11)" has been changed to "reset catch plate (11)" for consistency with claim 1. has been suppressed throughout
